# EUROPÄISCHE PATENTSCHRIFT

(11) **EP 1 375 295 B1**
(45) Veröffentlichungstag und Bekanntmachung des Hinweises auf die Patenterteilung: **08.03.2006**
(21) Anmeldenummer: 03010648.8
(22) Anmeldetag: 13.05.2003
(51) Int. Cl.: B62D 1/18

(54) **Lenkwelle für Kraftfahrzeuge**
Steering shaft for vehicles
Arbre de direction pour véhicules

(30) Priorität: 18.06.2002 DE 20209402 U; 09.08.2002 DE 20212294 U
(43) Veröffentlichungstag der Anmeldung: 02.01.2004
(73) Patentinhaber: DURA Automotive Systems Reiche GmbH & Co. KG, 32791 Lage (DE)
(72) Erfinder: Reiche, Carl, 32657 Lemgo (DE); Harhoff, Burkhard, 33719 Bielefeld (DE)
(74) Vertreter: Dantz, Jan Henning

(56) Entgegenhaltungen:
- EP-A- 1 158 190
- DE-A- 3 813 422
- US-A- 3 365 914
- US-A- 4 535 645
- PATENT ABSTRACTS OF JAPAN vol. 2002, no. 07, 3. Juli 2002 (2002-07-03) -& JP 2002 070855 A (HIIHAISUTO SEIKO KK), 8. März 2002 (2002-03-08)

## Beschreibung

Die Erfindung betrifft eine Lenkwelle für Kraftfahrzeuge, bestehend aus einem inneren und einem äußeren Wellenteil mit jeweils polygonalem Querschnitt, wobei die Wellenteile teleskopierbar ineinandergreifen und zur Übertragung eines Drehmomentes durch als Wälzkörper wirksame, tonnenförmige Rollen formschlüssig miteinander verbunden sind und die Laufbahnen der Rollen jeweils zwischen den Ecken an den Außenseiten des inneren Wellenteiles und den Innenseiten des äußeren Wellenteiles ausgebildet sind.

Eine Lenkwelle der gattungsgemäßen Art ist aus der DE 38 13 422 C2 bekannt.

Die US 4 535 645 offenbart eine Lenkwelle, wobei zwischen Laufbahnen Federelemente vorgesehen sind.

Bei der dort beschriebenen Konstruktion sind die Laufbahnen für die Rollen durch ebene Bereiche zwischen den Ecken der polygonale Querschnitte aufweisenden Wellenteile gebildet. In der gattungsbildenden Druckschrift sind in den Zeichnungen Rollen in Form von Zylinderrollen dargestellt, Spalte 2, Abs. 2 der genannten Druckschrift enthält allerdings den Hinweis darauf, daß es gegebenenfalls vorteilhaft sein kann, zylinderförmige Wälzkörper besonderer Bauart vorzusehen, z. B. Rollen mit konisch oder ballig ausgebildeten Enden, leicht tonnenförmige Rollen oder dergleichen, ohne daß hierfür eine Erläuterung gegeben wird.

Durch die Verwendung von ebenen Laufbahnen für die Rollen ergibt sich beim Einsatz von zylindrischen Rollen der Nachteil, daß bei Torsionsbeanspruchung der Lenkwelle insbesondere im Stirnkantenbereich der Rollen sehr hohe Anpreßkräfte auftreten, die zu Einprägungen in den Laufbahnen führen können. Diese Einprägungen können ihrerseits dazu führen, daß es beim teleskopartigen Verschieben der beiden Wellenteile relativ zueinander zu einem ungleichmäßigen Lauf und erhöhten, ungleichmäßigen Verschiebekräften kommt.

Werden bei ebenen Laufbahnen nun leicht tonnenförmige Rollen eingesetzt, ergibt sich eine hohe Oberflächenpressung zwischen den Rollen und den Laufbahnen, da theoretisch nur eine punktförmige Auflage der Rollen auf den ebenen Laufbahnen gegeben ist. Dieses kann zu Einpressungen in die Laufbahnen bei Torsionsbeanspruchung führen.

Der vorliegenden Erfindung liegt die Aufgabe zugrunde, eine Lenkwelle der gattungsgemäßen Art zu schaffen, bei der die Flächenpressung zwischen den Rollen einerseits und den Laufbahnen andererseits sowohl bei Torsionsbeanspruchung der Lenkwelle wie auch beim Teleskopieren der beiden Wellenteile in vertretbar geringen Grenzen gehalten wird.

Diese Aufgabe wird erfindungsgemäß dadurch gelöst, daß die Laufbahnen annähernd der konvexen Wölbung der Rollen als konkav gewölbte Mulden ausgebildet sind.

Durch die Anpassung der Quersehnittsform der Laufbahnen an die äußeren Mantellinien der Rollen ergibt sich für die beiden Belastungsfälle, denen eine Lenkwelle im Betrieb ausgesetzt ist, in keinem Falle eine erhöhte Flächenpressung, weder im Stirnkantenbereich der Rollen bei Torsionsbeanspruchung noch über die Längserstreckung der Rollen hinweg beim Teleskopieren der beiden Wellenteile relativ zueinander.

Eine Lenkwelle gemäß vorliegender Erfindung behält somit ihre Leichtgängigkeit auch über einen sehr langen Einsatzzeitraum hinweg.

Die Erfindung sieht weiter vor, daß zumindest zwischen zwei einander gegenüber liegenden Laufbahnen Federelemente angeordnet sind, die sich unter Federspannung jeweils an den Laufbahnen direkt oder indirekt abstützen. Durch den auf das innere Wellenteil aufgebrachten Druck werden die auf den anderen Laufbahnen geführten Rollen gegen das äußere Wellenteil gedrückt, so daß vorhandenes, toleranzbedingtes Spiel ausgeglichen wird. Hierdurch erfolgt eine Optimierung der Drehmomentenübertragung.

Ferner sieht die Erfindung vor, dass die Federelemente und/oder die Rollen in Kammern des Käfigs plaziert sind, und zwar zwischen zwei Rollen. Dabei können über die Länge des Käfigs verteilt mehrere Kammern vorgesehen sein, in denen jeweils ein oder mehrere Federelemente angeordnet sind.

Nach einer vorteilhaften Weiterbildung der Erfindung ist vorgesehen, daß die Laufbahnen zumindest oberflächengehärtet oder anderweitig verfestigt sind.

Hierdurch wird eine deutliche Verlängerung des Zeitraumes, innerhalb dessen ein spielfreier und leichtgängiger Lauf der Lenkwelle auch bei extrem hoher und häufiger Beanspruchung gewährleistet bleibt, deutlich erhöht.

Unter dem Gesichtspunkt einer kostengünstigen Montage ist es vorteilhaft, wenn die Rollen in an sich bekannter Weise in einem Käfig geführt sind.

Vorzugsweise sind die Federelemente als Blattfedern ausgebildet, wobei sie an einem beispielsweise aus einem geeigneten Kunststoff bestehenden Druckstück anliegen können, das am inneren Wellenteil anliegt. Durch einen bestimmbaren Reibungskoeffizienten des Druckstückes wird die durch die Rollen vorgegebene Leichtgängigkeit bei einer axialen Verschiebung zwischen innerem und äußerem Wellenteil beibehalten.

Weitere vorteilhafte Ausbildungen der Erfindung sind in den Unteransprüchen gekennzeichnet.

Ausführungsbeispiele der Erfindung werden nachfolgend anhand der beigefügten Zeichnungen beschrieben.

Es zeigen:
- Figur 1: einen Querschnitt durch eine erfindungsgemäße Lenkwelle,
- Figur 2: einen Querschnitt durch das äußere Wellenteil der Lenkwelle nach Figur 1,
- Figur 3: einen Querschnitt durch das innere Wellenteil der erfindungsgemäßen Lenkwelle,
- Figur 4: eine Ansicht einer Rolle, wie sie zwischen dem inneren und dem äußeren Wellenteil eingesetzt wird.
- Figur 5: ein weiteres Ausführungsbeispiel der Erfindung in einem Längsschnitt,
- Figur 6: einen Querschnitt durch die Lenkwelle nach Figur 5 gemäß der Linie VI-VI in Figur 5.

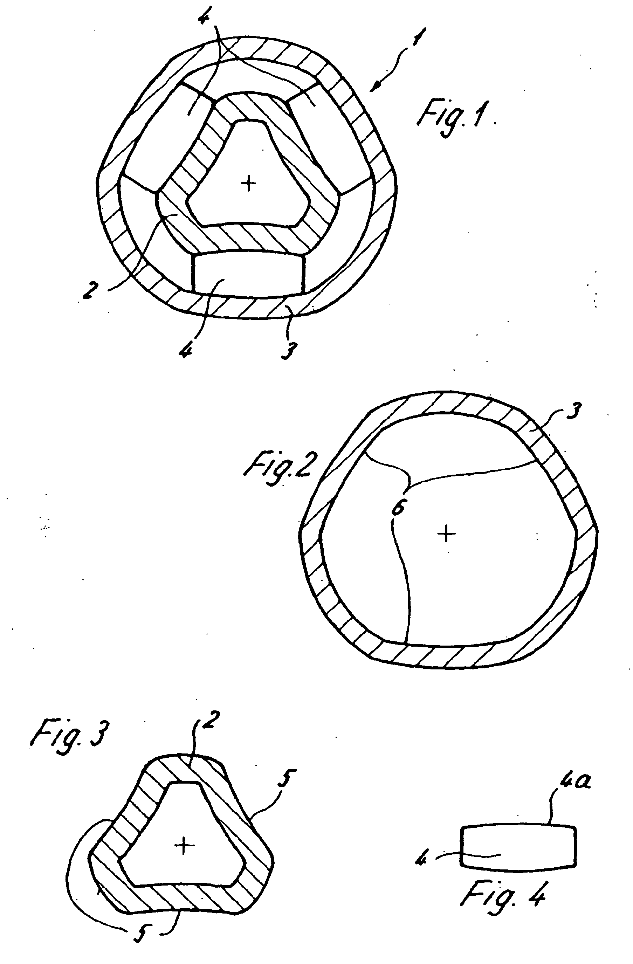

Der in Figur 1 gezeigte Querschnitt durch eine insgesamt mit dem Bezugszeichen 1 bezeichnete Lenkwelle für ein Kraftfahrzeug macht deutlich, daß die Lenkwelle 1 aus einem inneren Wellenteil 2, einem äußeren Wellenteil 3 mit jeweils polygonalem Querschnitt und aus einer Vielzahl von als Wälzkörper wirksamen Rollen 4 besteht.

Die beiden Wellenteile 2 und 3 greifen in bekannter Weise teleskopierbar ineinander und sind durch die Rollen 4 zur Übertragung eines Drehmomentes formschlüssig miteinander verbunden.

Die Rollen 4 sind, was auch Figur 4 besonders deutlich macht, tonnenförmig ausgebildet und weisen insoweit eine konvexe Außenkontur 4a auf.

Die Wellenteile 2 und 3 mit ihrem polygonalen Querschnitt sind jeweils zwischen den Ecken einerseits an den Außenseiten des inneren Wellenteiles 2 und andererseits an den Innenseiten des äußeren Wellenteiles 3 mit Laufbahnen 5 bzw. 6 für die Rollen 4 ausgestattet, wobei die angesprochenen Laufbahnen 5 bzw. 6 entsprechend der konvexen Wölbung der Rollen 4 als konkav gewölbte Mulden ausgebildet sind.

Die Wellenteile 2 und 3 können insgesamt aus einem gehärteten Material bestehen, es ist aber auch durchaus möglich, die Wellenteile 2 und 3 lediglich im Bereich der Laufbahnen 5 und 6 einer Oberflächenhärtung zu unterziehen.

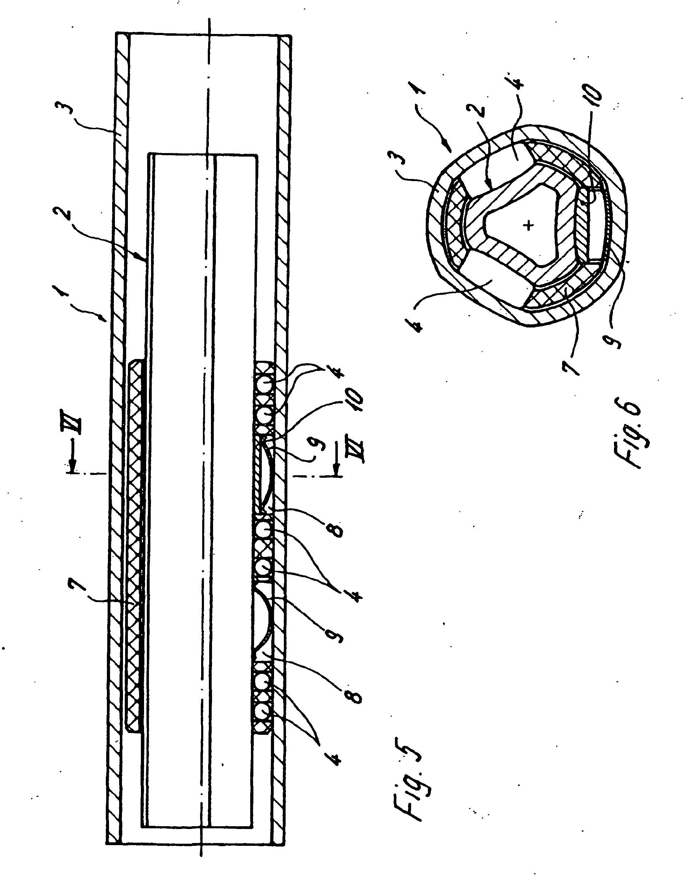

Für die Montage einer kompletten Lenkwelle 1 ist es von Vorteil, wenn die Rollen 4 in an sich bekannter Weise in einem Käfig 7 (Figuren 5 und 6) geführt sind.

Durch die Anpassung der Form der Laufbahnen 5 und 6 an die Form der Rollen 4 wird erreicht, daß eine möglichst geringe Flächenpressung zwischen den Rollen 4 und den Laufbahnen 5 und 6 unter allen Belastungs- und Einsatzfällen gegeben ist, wobei diese Belastungs- und Einsatzfälle einerseits durch eine Torsionsbeanspruchung beim Drehen der Lenkwelle 1 um ihre Mittellängsachse und durch das teleskopartige Verschieben der Wellenteile 2 und 3 relativ zueinander charakterisiert sind. In beiden Fällen bleibt eine weitgehend gleichmäßige Last- oder Kraftverteilung über die gesamte Länge der Rollen 4 hinweg erhalten, so daß die Flächenpressung über die gesamte Länge der Laufrollen 4 hinweg praktisch gleichbleibend ist.

Weder bei einer Torsionsbeanspruchung der Lenkwelle 1 noch bei einer teleskopartigen Verschiebung der beiden Wellenteile 2 und 3 relativ zueinander und ebenso wenig bei einer Kombination dieser beiden Belastungsfälle treten unerwünschte Spitzen bezüglich der Flächenpressung zwischen den Bauteilen auf, so daß eine lange Lebensdauer mit gleichbleibend spielfreiem und leichtgängigen Lauf gewährleistet ist.

In den Figuren 5 und 6 ist eine weitere Ausführungsform der Lenkwelle 1 dargestellt, bei der, wie erwähnt, die Rollen 4 in dem Käfig 7 gehalten sind.

Zwischen zwei Paaren von Rollen 4 ist jeweils im Käfig 7 eine Kammer 8 vorgesehen, in der ein Federelement 9 in Form einer bügelförmigen Blattfeder plaziert ist.

Während das in der in der Figur 5 erkennbaren linksseitigen Kammer 8 einliegende Federelement 9 sich sowohl am äußeren Wellenteil 3 wie auch am inneren Wellenteil 2 unmittelbar abstützt, übt das Federelement 9 in der rechtsseitigen Kammer 8 den Federdruck auf das innere Wellenteil 2 indirekt aus, wozu ein aus einem geeigneten, einen niedrigen Reibungskoeffizienten aufweisendes Druckstück 10 anliegt, das das innere Wellenteil 2 kontaktiert.

Nach einer bevorzugten Ausführungsform ist zumindest die am inneren Wellenteil 2 anliegende Fläche des Druckstückes 10 ballig, entsprechend der muldenförmigen Ausbildung der zugeordneten Laufbahn 5 des inneren Wellenteiles 2 angepaßt.

Eine Anpassung der Querschnittskontur ist auch an der der Laufbahn 6 des äußeren Wellenteiles 3 anliegenden Seite des Federelementes 9 denkbar.

Darüber hinaus besteht die Möglichkeit das Federelement 9 zweiteilig auszubilden, wobei sich jedes der beiden identischen Teile in Längsachsrichtung der Lenkwelle 1 erstreckt.

Statt der dargestellten Blattfeder kann das Federelement 9 durchaus auch in einer anderen Form konfiguriert sein, wobei statt eines Druckstückes 10 ein weiteres Druckstück an der Laufbahn 6 des äußeren Wellenteiles 3 anliegen kann. In diesem Fall sind als Federelemente 9 beispielsweise Schraubenfedern oder dergleichen einsetzbar.

## Patentansprüche

1. Lenkwelle (1) für Kraftfahrzeuge, bestehend aus einem inneren und einem äußeren Wellenteil (2, 3) mit jeweils polygonalem Querschnitt, wobei die Wellenteile (2, 3) teleskopierbar ineinander greifen und zur Übertragung eines Drehmomentes durch als Wälzkörper wirksame, tonnenförmige Rollen (4) formschlüssig miteinander verbunden sind und die Laufbahnen (5, 6) der Rollen (4) jeweils zwischen den Ecken an den Außenseiten des inneren Wellenteiles (2) und den Innenseiten des äußeren Wellenteiles (3) ausgebildet sind, **dadurch gekennzeichnet, dass** die Laufbahnen (5, 6) annährend der konvexen Wölbung der Rollen (4) als konkav gewölbte Mulden ausgebildet sind, dass zumindest zwischen zwei einander gegenüber liegenden Laufbahnen (5, 6) Federelemente (9) vorgesehen sind, die sich unter Federspannung jeweils an den Laufbahnen (5, 6) direkt oder indirekt abstützen, und dass die Rollen (4) und/oder die Federelemente (9) in an sich bekannter Weise in einem Käfig (7) gehalten sind.

2. Lenkwelle nach Anspruch 1, **dadurch gekennzeichnet, daß** die Laufbahnen (5, 6) zumindest oberflächengehärtet oder anderweitig verfestigt sind.

3. Lenkwelle nach Anspruch 1, **dadurch gekennzeichnet, daß** die Federelemente (9) als Blattfedern ausgebildet sind.

4. Lenkwelle nach Anspruch 3, **dadurch gekennzeichnet, daß** die Blattfedern bügelförmig ausgebildet sind.

5. Lenkwelle nach Anspruch 4, **dadurch gekennzeichnet, daß** die Federelemente (9) in Kammern (8) des Käfigs (7) plaziert sind.

6. Lenkwelle nach Anspruch 6, **dadurch gekennzeichnet, daß** die Kammer (8) zwischen zwei Rollen (4) vorgesehen ist.

7. Lenkwelle nach Anspruch 1, **dadurch gekennzeichnet, daß** sich das Federelement (9) an einem am inneren Wellenteil (2) und/oder äußeren Welltenteil (3) anliegenden Druckstück (10) abstützt.

8. Lenkwelle nach Anspruch 7, **dadurch gekennzeichnet, daß** das Druckstück (10) aus einem Kunststoff besteht.

9. Lenkwelle nach Anspruch 1, **dadurch gekennzeichnet, daß** das Federelement (9) zweiteilig ausgebildet ist.

10. Lenkwelle nach einem der Ansprüche 1 bis 11, **dadurch gekennzeichnet, daß** die beiden Teile des geteilten Federelementes (9) in Längsachsrichtung der Lenkwelle (1) voneinander getrennt sind.

## Claims

1. Steering shaft (1) for motor vehicles, composed of inner and outer shaft parts (2, 3) each with a polygonal cross section, the shaft parts (2, 3) engaging one in the other in a telescopic fashion and being connected to one another in a positively engaging fashion in order to transmit a torque by means of barrel-shaped rollers (4) which act as rolling bodies, and the tracks (5, 6) of the rollers (4) are each formed between the corners on the outer sides of the inner shaft part (2) and the inner sides of the outer shaft part (3), **characterized in that** the tracks (5, 6) are formed approximate to the convex curvature of the rollers (4) as concavely curved depressions, **in that** spring elements (9) which are supported directly or indirectly on the tracks (5, 6) under spring tension are provided at least between two tracks (5, 6) which are located opposite one another, and **in that** the rollers (4) and/or the spring elements (9) are secured in a cage (7) in a manner known per se.

2. Steering shaft according to Claim 1, **characterized in that** the tracks (5, 6) are at least surface-hardened or consolidated in some other way.

3. Steering shaft according to Claim 1, **characterized in that** the spring elements (9) are embodied as leaf springs.

4. Steering shaft according to Claim 3, **characterized in that** the leaf springs are embodied as clips.

5. Steering shaft according to Claim 4, **characterized in that** the spring elements (9) are located in chambers (8) of the cage (7).

6. Steering shaft according to Claim 6, **characterized in that** the chamber (8) is provided between two rollers (4).

7. Steering shaft according to Claim 1, **characterized in that** the spring element (9) is supported on a pressure element (10) which bears against the inner shaft part (2) and/or outer shaft part (3)

8. Steering shaft according to Claim 7, **characterized in that** the pressure element (10) is composed of plastic.

9. Steering shaft according to Claim 1, **characterized in that** the spring element (9) is formed in two parts.

10. Steering shaft according to one of Claims 1 to 11, **characterized in that** the two parts of the divided spring element (9) are separated from one another in the longitudinal axial direction of the steering shaft (1).

## Revendications

1. Arbre de direction (1) pour véhicules automobiles, comportant une partie d'arbre intérieure (2) et une partie d'arbre extérieure (3), ayant chacune une section polygonale, les parties d'arbre (2, 3) s'engageant l'une dans l'autre de manière télescopique et étant assemblées l'une à l'autre par complémentarité de forme pour transmettre un couple de rotation par l'intermédiaire de rouleaux (4) en forme de fûts, agissant comme des corps de roulement, et les voies de roulement (5, 6) des rouleaux (4) étant réalisées respectivement entre les angles sur les côtés extérieurs de la partie d'arbre intérieure (2) et les côtés intérieurs de la partie d'arbre extérieure (3), **caractérisé en ce que** les voies de roulement (5, 6) sont réalisées sous forme de creux à courbure concave se rapprochant de la courbure convexe des rouleaux (4), **en ce que**, au moins entre deux voies de roulement (5, 6) disposées face à face, il est prévu des éléments de ressort (9) qui, sous précontrainte, prennent appui chacun directement ou indirectement sur les voies de roulement (5, 6), et **en ce que** les rouleaux (4) et/ou les éléments de ressort (9) sont maintenus de manière connue en soi dans une cage (7).

2. Arbre de direction selon la revendication 1, **caractérisé en ce que** les voies de roulement (5, 6) ont au moins été soumis à une trempe superficielle ou ont été durcis d'une autre manière.

3. Arbre de direction selon la revendication 1, **caractérisé en ce que** les éléments de ressort (9) sont conçus sous forme de ressorts à lames.

4. Arbre de direction selon la revendication 3, **caractérisé en ce que** les ressorts à lames sont conçus sous forme d'étrier.

5. Arbre de direction selon la revendication 4, **caractérisé en ce que** les ressorts à lames (9) sont positionnés dans des compartiments (8) de la cage (7).

6. Arbre de direction selon la revendication 6, **caractérisé en ce que** le compartiment (8) est prévu entre deux rouleaux (4).

7. Arbre de direction selon la revendication 1, **caractérisé en ce que** l'élément de ressort (9) prend appui sur une pièce d'appui (10), qui est en appui sur la partie d'arbre intérieure (2) et/ou la partie d'arbre extérieure (3).

8. Arbre de direction selon la revendication 7, **caractérisé en ce que** la pièce d'appui (10) est réalisée en matière synthétique.

9. Arbre de direction selon la revendication 1, **caractérisé en ce que** l'élément de ressort (9) est réalisé en deux parties.

10. Arbre de direction selon l'une quelconque des revendications 1 à 11, **caractérisé en ce que** les deux parties de l'élément de ressort (9) divisé sont séparées l'une de l'autre dans le sens de l'axe longitudinal de l'arbre de direction (1).
